# EUROPEAN PATENT APPLICATION

(11) **EP 4 481 617 A1**
(43) Date of publication of application: **25.12.2024**
(21) Application number: 23756546.0
(22) Date of filing: 01.02.2023
(51) Int. Cl.: G06F 40/106, G06F 40/177, G06F 40/174, G06F 40/58, G06F 40/51

(54) **METHOD AND COMPUTER PROGRAM FOR PROVIDING EDITING INTERFACE FOR TRANSLATED CONTENT**

(30) Priority: 18.02.2022 KR 20220021739
(71) Applicant: Ailinggo, Inc., Seoul 06109 (KR)
(72) Inventor: LEE, Jai Wook, Seoul 03719 (KR); LEE, Hong Sik, Guri-si, Gyeonggi-do 11914 (KR); HAN, Ik Jun, Seoul 05503 (KR)
(74) Representative: Studio Torta S.p.A.
(86) International application number: PCT/KR2023/001454
(87) International publication number: WO 2023/158133

(57) **Abstract**

Provided is a method of providing an editing interface for translated content in which translated strings translated in predetermined units and an interface for editing the same are provided.

## Description

### Technical Field

The present disclosure relates to a method of providing an editing interface for translated content, in which translated strings translated in predetermined units and an interface for editing the same are provided.

### Background Art

Today, the development of information and communication technology has enabled users to access a variety of information through Internet searches. Specifically, users may access an Internet search site via a terminal capable of accessing the Internet, then search for a variety of content related to news, knowledge, games, communities, etc., and subsequently obtain information about web pages, files, etc.

Meanwhile, as contemporary living environments diversify, the number of contracts and disputes with companies based not only domestically but also internationally is on the rise, and as a result, the need for translation of documents such as contracts is gradually increasing. Consequently, many users employ translation services using trained translation engines.

However, such translation services merely provide a result of translating input content, and a user needs to perform a separate procedure for re-editing a translated text to document the translated content.

Moreover, existing translation services rely on one translation engine to generate translation results, such that when content to be translated includes texts belonging to a plurality of categories, some texts may not be completely translated. When a result from one engine is not satisfactory, a reviewer has to make manual modifications.

### Disclosure

### Technical Problem

The present disclosure provides an interface that enables intuitive comparison and quick editing of original sentences and translated sentences.

The present disclosure also provides an interface that immediately applies a translation result from merging/segmentation of original sentences.

The present disclosure also allows a user to select an appropriate translation result for each part in a process of reviewing translation of original content. In particular, the present disclosure aims to easily solve errors in translation results that may arise due to the use of a single translation engine when a document including a combination of sentences belonging to a plurality of fields is translated or when the translated content needs to be modified.

### Technical Solution

There may be many ways to achieve the objective of the present disclosure, but one embodiment is presented below to solve the problem and the present disclosure is not limited thereto.

A method of providing an editing interface for translated content according to an embodiment of the present disclosure includes receiving, from a server, one or more original sentences and one or more translated sentences in which the one or more translated sentences are results of translating, by the server, the one or more original sentences by using a first translation engine selected by a user, and displaying the one or more original sentences and the one or more translated sentences to correspond to one another.

The one or more original sentences may include a first original sentence, and the one or more translated sentences may include a first translated sentence that is a result of translating the first original sentence by using the first translation engine, and the displaying may include displaying a table on which the one or more original sentences and the one or more translated sentences are sequentially presented such that the first original sentence and the first translated sentence are located in a same row or a same column.

The displaying may include determining, in the table, a size of the row or the column where the first original sentence and the first translated sentence are located, based on a greater length between a length of the first original sentence and a length of the first translated sentence.

The method may further include, after the displaying, updating display of the table according to a user's modification input with respect to the table.

The one or more original sentences may include a second original sentence, and the updating of the display of the table may include obtaining a user's input to segment the second original sentence in the table into a first original segmented sentence and a second original segmented sentence, receiving, from the server, a first translated segmented sentence and a second translated segmented sentence which are translated sentences respectively of the first original segmented sentence and the second original segmented sentence, displaying, in the table, the first original segmented sentence and the second original segmented sentence in place of an existing display, in cells where the second original sentence and a second translated sentence, which is a translated sentence of the second original sentence, are displayed, and generating, in the table, new cells adjacent to the cells where the second original sentence and a second translated sentence, which is a translated sentence of the second original sentence, are displayed, and displaying the second original segmented sentence and the second translated segmented sentence in the new cells. The new cells may be located between the cells where the second original sentence and the second translated sentence are displayed and cells where a third original sentence, which is a next sentence of the second original sentence, and a translation result thereof are displayed, in the table.

In the updating of the display of the table, the one or more original sentences may include a fourth original sentence and a fifth original sentence, and the one or more translated sentences may include a fourth translated sentence and a fifth translated sentence which are results of respectively translating the fourth original sentence and the fifth original sentence by using the first translation engine, and the updating of the display of the table may include obtaining a user's input to merge the fourth original sentence and the fifth original sentence in the table, displaying, in the table, a first merged sentence as a result of merging the fourth original sentence and the fifth original sentence in place of existing display in a cell where the fourth original sentence is displayed, displaying, in the table, a second merged sentence as a result of merging the fourth translated sentence and the fifth translated sentence in place of existing display in a cell where the fourth translated sentence is displayed, and deleting, from the table, cells where the fifth original sentence and the fifth translated sentence are displayed.

The method may further include, after the displaying, providing an alternative translated sentence as a result of translating a user-selected sentence by using one or more different translation engines and modifying the one or more translated sentences based on a user's selection with respect to the provided alternative translated sentence.

The modifying of the one or more translated sentences may include displaying, by each of one or more second translation engines, an alternative translated sentence as a result of translating an original sentence related to the user-selected sentence in response to a user's input to select any one of displayed sentences, wherein the one or more second translation engines include a translation engine that is different from the first translation engine.

The modifying of the one or more translated sentences may include replacing, according to a user's input to select any one of displayed one or more alternative translated sentences, the translated sentence related to the user-selected sentence with the selected alternative translated sentence and displaying the selected alternative translated sentence as a translated sentence of the original sentence related to the user-selected sentence.

The modifying of the one or more translated sentences may include, when a rate of replacement of the one or more translated sentences with an alternative translated sentence generated by a specific second translation engine exceeds a predetermined threshold rate, displaying an interface for determining whether to replace the first translation engine with the specific second translation engine.

The method may further include, after the displaying, transmitting, to the server, a request for generating translated content including the one or more translated sentences, in response to obtaining a user's documentation request for the displayed one or more translated sentences.

The server may determine positions of the one or more translated sentences, styles of the one or more translated sentences, and attributes of the one or more translated sentences in the translated content by referring to positions of the one or more original sentences, styles of the one or more original sentences, and attributes of the one or more original sentences in original content.

The method may further include, before the receiving, providing an interface for receiving a user's translation request for the original content.

The interface may include at least one of an interface for uploading the original content, an interface for selecting a category of the original content, and an interface for selecting a translation target language of the original content.

### Advantageous Effects

According to the present disclosure, an interface may be provided which enables intuitive comparison and quick editing of original sentences and translated sentences.

Moreover, the present disclosure also provides an interface that immediately applies a translation result from merging/segmentation of original sentences.

The present disclosure also allows a user to select an appropriate translation result for each part in a process of reviewing translation of original content.

In particular, the present disclosure may easily resolve errors in translation results, which may arise due to the use of a single translation engine, in translation of a document including a combination of sentences belonging to a plurality of fields.

### Description of Drawings

FIG. 1 schematically shows a configuration of a content translation system, according to embodiments of the present disclosure.
FIG. 2 schematically shows a configuration of a server, according to an embodiment of the present disclosure.
FIG. 3 schematically shows a configuration of a user terminal, according to an embodiment of the present disclosure.
FIG. 4 shows a screen on which an interface according to an embodiment of the present disclosure is provided.
FIG. 5 shows a screen on which original sentences and translated sentences are displayed corresponding to each other, according to an embodiment of the present disclosure.
FIG. 6 shows a table updated by a user input to segment original sentences, according to an embodiment of the present disclosure.
FIGS. 7 and 8 show a process in which a table is updated by a user input to merge original sentences, according to an embodiment of the present disclosure.
FIGS. 9 and 10 show a process in which an alternative translated sentence is provided and a table is updated based on user selection with respect to the provided sentence, according to an embodiment of the present disclosure.
FIGS. 11 and 12 are flowcharts for describing a method of providing an interface for editing translated content provided by a user terminal, according to an embodiment of the present disclosure.

### Best Mode

A method of providing an editing interface for translated content according to an embodiment of the present disclosure includes receiving, from a server, one or more original sentences and one or more translated sentences, in which the one or more translated sentences are results of translating, by the server, the one or more original sentences by using a first translation engine selected by a user, and displaying the one or more original sentences and the one or more translated sentences to correspond to one another.

### Mode for Invention

The present disclosure may have various modifications thereto and various embodiments, and thus particular embodiments will be illustrated in the drawings and described in detail in a detailed description. Effects and features of the present disclosure, and methods for achieving them will become clear with reference to the embodiments described later in detail together with the drawings. However, the present disclosure is not limited to the embodiments disclosed below and may be implemented in various forms.

Hereinafter, embodiments of the present disclosure will be described in detail with reference to the accompanying drawings, and in description with reference to the drawings, the same or corresponding components are given the same reference numerals, and redundant description thereto will be omitted.

In the following embodiments, the terms such as first, second, etc., have been used to distinguish one component from other components, rather than limiting. In the following embodiments, singular forms include plural forms unless apparently indicated otherwise contextually. In the following embodiments, the terms "include", "have", or the like, are intended to mean that there are features, or components, described herein, but do not preclude the possibility of adding one or more other features or components. In the drawings, the size of components may be exaggerated or reduced for convenience of description. For example, since the size and form of each component shown in the drawings are arbitrarily shown for convenience of description, the present disclosure is not necessarily limited to the illustrated bar.

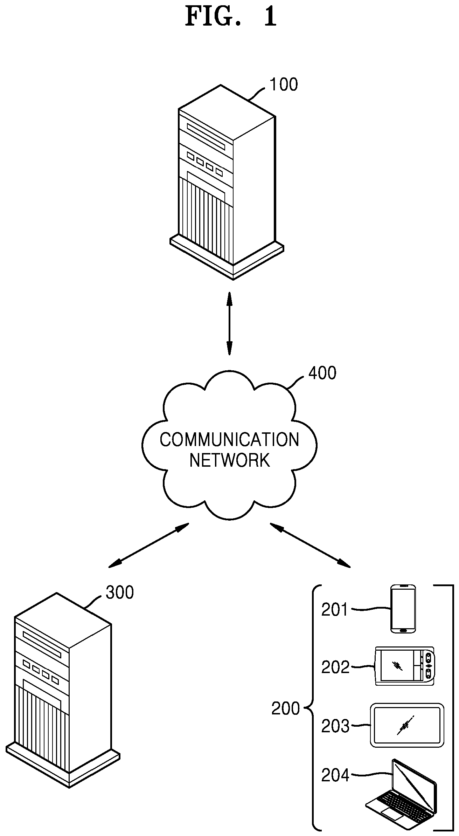

FIG. 1 schematically shows a configuration of a content translation system, according to embodiments of the present disclosure.

The content translation system according to an embodiment of the present disclosure may translate original content including one or more original sentences in predetermined units. For example, the content translation system may translate original content in the unit of a sentence and generate a translated sentence.

The content translation system according to an embodiment of the present disclosure may provide an editing interface that allows a user to edit translated content. The editing interface may include an interface that provides a result of translating at least a part of the translated content by using one or more other translation engines. A detailed description thereof will be provided below.

In the present disclosure, 'original content' is written in a first language that is a language before translation, and may include a text.

In the present disclosure, the original content may merely include a text, or may include various types of objects together with a text. The various types of objects may include, for example, an object in an image form, an object in a table form, etc.

In the present disclosure, the original content may be a file in a form that may be stored in a computing device or in a form of a web page provided by a web browsing application. The original content may also mean a text in a form processible in the computing device.

In the present disclosure, an 'original sentence' may mean a sentence included in the above-described original content. Thus, the original sentence may be a sentence written in the first language that is the language before translation.

In the present disclosure, 'translation content' or 'translated content' may be content as a result of translating the original content into a second language. For example, when the first language is Korean and the second language is English, the translated content may be content as a result of translating the original content, written in Korean, into English.

In the present disclosure, a 'translated sentence' may mean a sentence included in the above-described translated content. Thus, the translated sentence may be a sentence written in the second language.

In the present disclosure, the original sentence and the translated sentence may correspond to each other. For example, when the original content includes 100 original sentences, the translated content may also include 100 translated sentences as a result of respectively translating the 100 original sentences.

In the present disclosure, a 'translation engine' may refer to various types of translation means for converting a string written in the first language into a string having the same meaning in the second language. For example, the translation engine may be a machine translation engine based on statistics, such as a statistical machine translation (SMT) type engine. Meanwhile, the translation engine may be an engine of a neural machine translation (NMT) type, i.e., an artificial intelligence neural network-based machine translation type. Such an engine of the NMT type may automatically learn a neural network (encoder) for converting a translation target string into a sentence vector and a neural network (decoder) for creating a sentence in a translation target language from the sentence vector from a large parallel corpus. However, the above-described two types of translation engines are merely examples and the spirit of the present disclosure is not limited thereto.

In the present disclosure, the translation engine may be implemented by a server 100 or a translation server 300 described below.

The content translation system according to an embodiment of the present disclosure may include the server 100, a user terminal 200, the translation server 300, and a communication network 400, as shown in FIG. 1.

The server 100 according to an embodiment of the present disclosure may generate a translation string from the original content received from the user terminal 200. The server 100 may also provide the user terminal 200 with an interface for editing the translation string along with the translation string. In the present disclosure, the 'string' may be used as a superordinate concept including sentences, texts, and words.

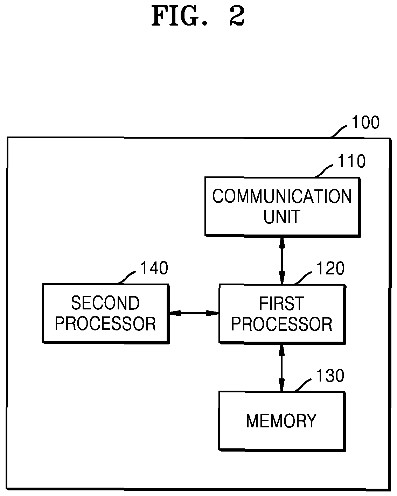

FIG. 2 schematically shows a configuration of the server 100, according to an embodiment of the present disclosure. Referring to FIG. 2, the server 100 according to an embodiment of the present disclosure may include a communication unit 110, a first processor 120, a memory 130, and a second processor 140. Although not shown in the drawings, the server 100 according to an embodiment of the present disclosure may further include an input/output unit, a program storing unit, etc.

The communication unit 110 may be a device including hardware and software required for transmission and reception of signals such as a control signal or a data signal through wired/wireless connection with other network devices such as the user terminal 200 and/or the translation server 300.

The first processor 120 may be a device that controls a series of processes of generating a translation string from the original content received from the user terminal 200 and providing the translation string back to the user terminal 200. Herein, the 'processor' may mean, for example, a data processing device embedded in hardware, which has a physically structured circuit to perform a function represented as a code or a command included in a program. Examples of the data processing device embedded in hardware may include a microprocessor, a central processing unit (CPU), a processor core, a multiprocessor, an application-specific integrated circuit (ASIC), a field programmable gate array (FPGA), and so forth, but the scope of the present disclosure is not limited thereto.

The memory 130 may perform a function to temporarily or permanently store data processed by the server 100. The memory 130 may include a magnetic storage media or a flash storage media, but the scope of the present disclosure is not limited thereto. For example, the memory 130 may temporarily and/or permanently store the original content received from the user terminal 200 and the translation string generated from the original content.

The second processor 140 may mean a device that performs computations under control of the above-described first processor 120. In this case, the second processor 140 may be a device having the higher computational capability than the above-described first processor 120. For example, the second processor 140 may include a graphics processing unit (GPU). However, this is an example and the spirit of the present disclosure is not limited thereto. In an embodiment of the present disclosure, the second processor 140 may plural or singular.

In an embodiment of the present disclosure, the second processor 140 may provide a resource that the translation engine implemented by the server 100 uses to translate the original content. For example, when the translation engine implemented by the server 100 is an engine of the artificial intelligence neural network-based machine translation type, the second processor 140 may perform computations using an artificial intelligence neural network. However, this is an example and the spirit of the present disclosure is not limited thereto.

The user terminal 200 according to an embodiment of the present disclosure may receive a translation string and an interface for editing the same from the server 100 and provide the translation string and the interface to a user. For example, the user terminal 200 may upload the original content to be translated on a website provided by the server 100 to the server 100. The user terminal 200 may also receive, from the server 100, a web page including an interface in which the translated string is written in an editable form and provide the web page to the user. However, such a providing form is illustrative and the spirit of the present disclosure is not limited thereto.

In a selective embodiment of the present disclosure, the user terminal 200 may upload the original content to the server 100 through an application (or an application program) capable of transmitting and receiving data to and from the server 100 and may be provided with an editing interface for the translated string from the server 100.

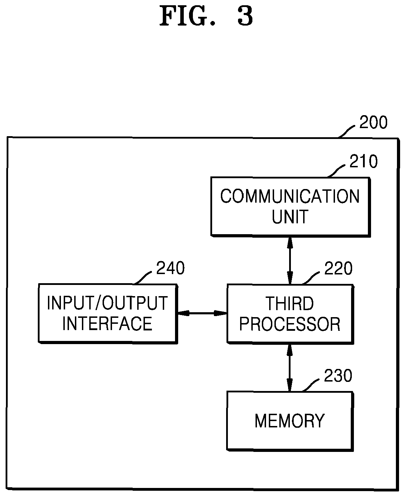

FIG. 3 schematically shows a configuration of the user terminal 200, according to an embodiment of the present disclosure. Referring to FIG. 3, the user terminal 200 according to an embodiment of the present disclosure may include a communication unit 210, a third processor 220, a memory 230, and an input/output interface 240. Although not shown in the drawing, the user terminal 200 according to an embodiment of the present disclosure may further include an input/output unit that obtains a user's input or provides a screen to the user, etc.

The communication unit 210 may be a device including hardware and software required for the user terminal 200 to transmit and receive signals such as a control signal or a data signal through wired/wireless connection with other network devices such as the server 100 and/or the translation server 300.

The third processor 220 may be a device that provides the editing interface for the translated content, received from the server 100, to the user and controls a process of editing or completing the translated content according to a user's input to the editing interface. Herein, the 'processor' may mean, for example, a data processing device embedded in hardware, which has a physically structured circuit to perform a function represented as a code or a command included in a program. Examples of the data processing device embedded in hardware may include a microprocessor, a CPU, a processor core, a multiprocessor, an ASIC, an FPGA, and so forth, but the scope of the present disclosure is not limited thereto.

The memory 230 may perform a function to temporarily or permanently store data processed by the user terminal 200. The memory 230 may include a magnetic storage media or a flash storage media, but the scope of the present disclosure is not limited thereto.

The input/output interface 240 may be a means for an interface with an input/output device (not shown) that obtains a user's input. The input device may include a device, e.g., a keyboard, a mouse, etc., and the output device may include a device such as a display unit.

The user terminal 200 according to an embodiment of the present disclosure may mean portable electronic devices 201, 202, and 203 or a computer 204. Thus, the user terminal 200 used herein may also be referred to as a 'computing device'.

The translation server 300 according to an embodiment of the present disclosure may provide a translated string with respect to the received string. In an embodiment of the present disclosure, the translation server 300 may be a server that provides a translation service to a third party. For example, the translation server 300 may be a server that provides the translation service in the form of an API to many people.

The communication network 400 according to an embodiment of the present disclosure may refer to a communication network that mediates data transmission and reception between components of the content translation system. For example, the communication network 400 may include wired networks such as local area networks (LANs), wide area networks (WANs), metropolitan area networks (MANs), integrated service digital networks (ISDNs), etc., or wireless networks such as wireless LANs, code division multiple access (CDMA), Bluetooth, satellite communication, etc., but the scope of the present disclosure is not limited thereto.

In an embodiment of the present disclosure, the communication network 400 may be an internal network or an LAN that performs mediation to allow data transmission and reception between limited computing devices.

In another embodiment of the present disclosure, the communication network 400 may be an external network or an Internet network without any special restrictions on connected devices.

Hereinbelow, a description will be focused on a process, performed by the user terminal 200, of providing an editing interface for translated content.

The user terminal 200 according to an embodiment of the present disclosure may provide an interface for receiving a user's translation request for original content.

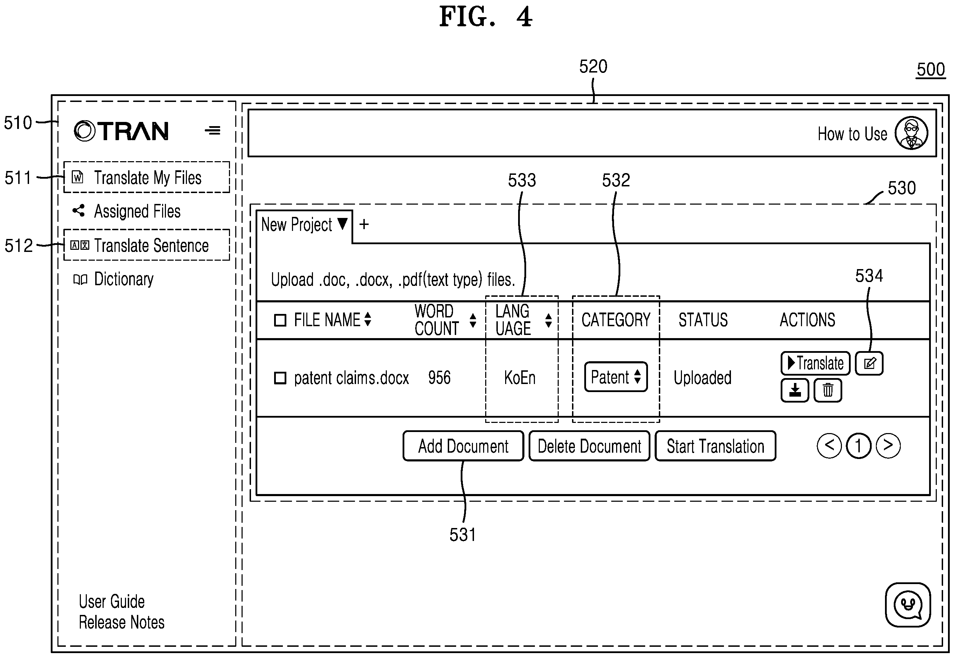

FIG. 4 illustrates a screen 500 on which an exemplary interface 530 is provided.

The user terminal 200 according to an embodiment of the present disclosure may provide a screen 500 including an interface 530 as shown in FIG. 4 in response to user's manipulation to access a web site that provides a translation service.

The screen 500 may include a menu region 510 for selecting a service provided on the web site and a display region 520 for providing a page selected on the menu region 510. For example, when the user selects a menu 511 for translating a user's file on the menu region 510, the user terminal 200 according to an embodiment of the present disclosure may provide an interface 530 for receiving a user's translation request on the display region 520. The interface 530 may be provided based on data received from the server 100.

The interface 530 according to an embodiment of the present disclosure may include an interface 531 for uploading the original content in a document file form, an interface 532 for selecting a category of the original content, an interface 533 for selecting a translation target language of the original content, and an interface 534 for transmitting the translation request to the server 100. The interface 530 may further include an interface for indicating a translation state of an uploaded file, an interface for deleting a file, etc.

The user terminal 200 according to an embodiment of the present disclosure may identify the original content to be transmitted to the server 100 for translation according to user's manipulation with respect to the interface 531. For example, the user terminal 200 may identify the original content to be transmitted to the server 100 according to a user's input to select the original content from among contents stored in the memory 230 of the user terminal 200.

The user terminal 200 may also obtain a user's input with respect to the other interfaces 532 and 533 and transmit the user's input to the server 100 together with the original content. For example, the user terminal 200 may obtain a user's input to request 'Patent' as a category of the original content and 'translation from Korean into English' through the other interfaces 532 and 533 and transmit the user's input to the server 100 together with the original content. However, this is an example and the spirit of the present disclosure is not limited thereto. Thus, the category of the original content may also be 'Legal', 'Affidavit', 'Finance/Accounting', etc., as well as 'Patent' described above. The translation request may include not only translation from Korean into English and vice versa, but also translation between Korean and other languages (e.g., Japanese, Chinese, German, etc.).

In a selective embodiment of the present disclosure, the user terminal 200 may identify a category of the original content and a language in which the original content is written, from the original content identified according to user's manipulation with respect to the interface 531. The user terminal 200 may display the category of the identified original content as a default value on the interface 532 and, similarly, display the language of the identified original content as a default value on the interface 533.

Meanwhile, when the user selects a menu 512 on the menu region 510, the user terminal 200 according to an embodiment of the present disclosure may provide, on the display region 520, an interface (not shown) for receiving a string to be translated for the user and providing a translation result of the string. In this case, the user may input a text to the displayed interface and may be provided with a result of translating the input text.

The server 100 according to an embodiment of the present disclosure may receive the original content from the user terminal 200 and segment a text included in the original content in a predetermined unit for translation. For example, the server 100 may extract a text from the original content and segment the extracted text in the unit of a sentence for translation. The server 100 may also segment the extracted text in the unit of a paragraph for translation or in units of words (e.g., 30 words) for translation. However, hereinbelow, for convenience of a description, the description will be made assuming that the server 100 translates the text included in the original content by segmenting the same in the unit of a sentence.

The server 100 according to an embodiment of the present disclosure may use a first translation engine to translate the original content. In this case, the 'first translation engine' may be implemented by the server 100 or the translation server 300.

The user terminal 200 according to an embodiment of the present disclosure may receive one or more original sentences and one or more translated sentences from the server 100. The user terminal 200 may display the received one or more original sentences and one or more translated sentences in such a way that they correspond to one another.

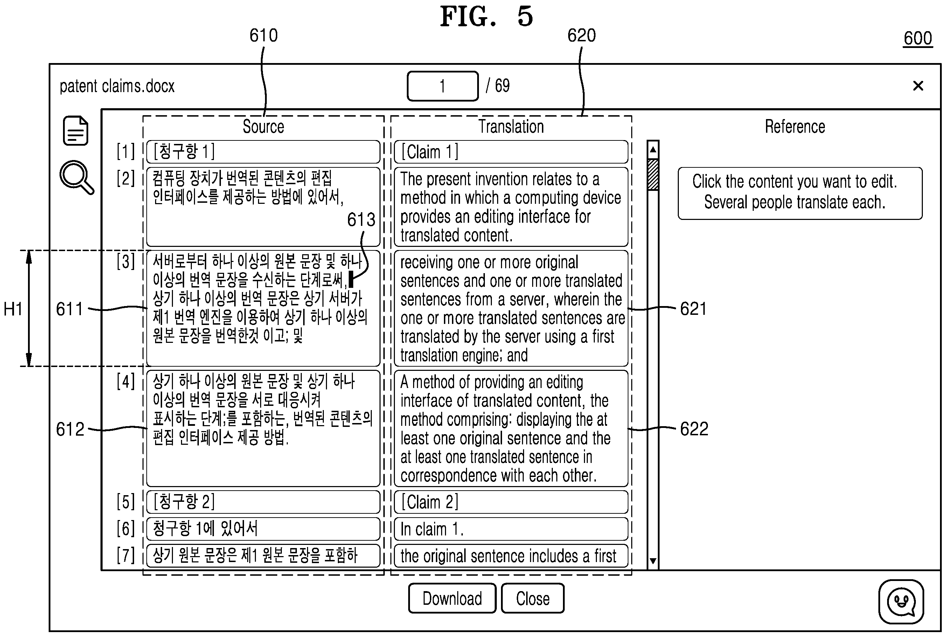

FIG. 5 shows an example screen 600 on which original sentences and translated sentences are displayed corresponding to one another.

As shown in FIG. 5, the user terminal 200 according to an embodiment of the present disclosure may display one or more original sentences 610 and one or more translated sentences 620 in a form of a table on which they are sequentially presented. In this case, the user terminal 200 may display a table such that the original sentence and the translated sentence, which have the same meanings, are presented on the same row or column. For example, the user terminal 200 may display a table such that a first original sentence 611 and a first translated sentence 621 as a result of translating the same to have the same meaning are presented in the same row.

The user terminal 200 according an embodiment of the present disclosure may determine a size of a row or a column in which the first original sentence and the first translated sentence are presented on the table, based on the greater length between the length of the first original sentence 611 and the length of the first translated sentence 621. For example, the user terminal 200 may determine a height H1 of a row in which two sentences 611 and 621 are presented, based on the length of the first translated sentence 621 having the greater length between the two sentences 611 and 621.

As such, the present disclosure may display the one or more original sentences 610 and the one or more translated sentences 620 in the same row (or column) and determine an attribute (e.g., a height of a row) of a cell shared by two sentences based on a length of the sentence having the greater length between the two sentences, thereby enabling intuitive comparison between the original sentence and the translated sentence.

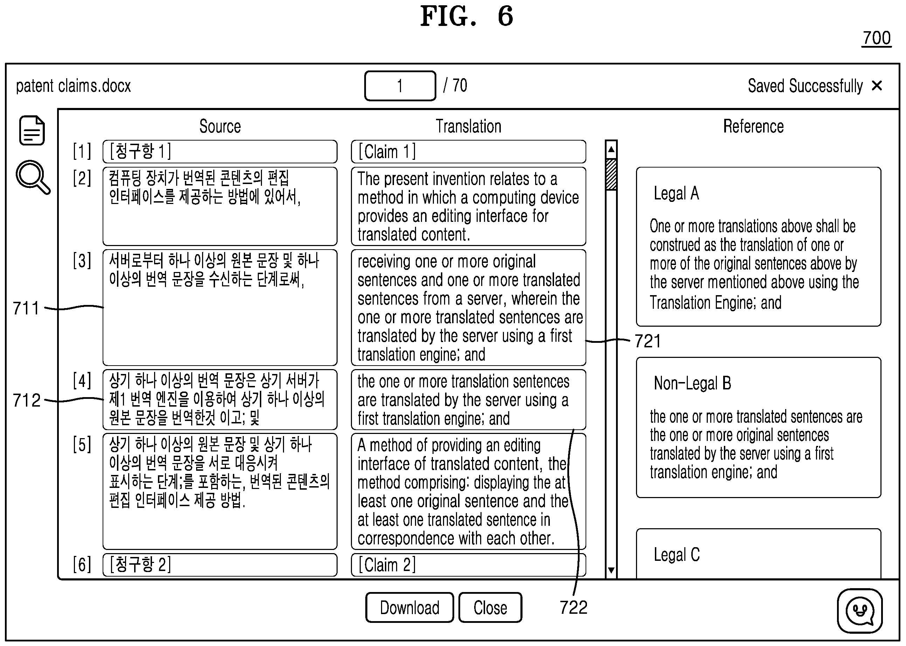

The user terminal 200 according to an embodiment of the present disclosure may update display of the table according to a user's modification input to the displayed table. Hereinbelow, with reference to FIGS. 6 to 10, a description will be made of a process in which the user terminal 200 updates display of a table according to various types of inputs of the user.

The user terminal 200 according to an embodiment of the present disclosure may update and display a table in response to a user's input to segment the original sentence. Hereinbelow, a description will be made with reference to the screen 600 of FIG. 5 and a screen 700 of FIG. 6 together.

The user terminal 200 according to an embodiment of the present disclosure may obtain a user's input to segment the first original sentence 611 in the table into a first original segmented sentence 711 and a second original segmented sentence 712. For example, the user terminal 200 may obtain an input to segment the first original sentence 611 by obtaining a user's line break input at a position 613 in the first original sentence 611.

The user terminal 200 according to an embodiment of the present disclosure may transmit, to the server 100, a translation request for the first original segmented sentence 711 and the second original segmented sentence 712, which are generated according to the above-described process. The user terminal 200 may also receive, from the server 100, a first translated segmented sentence 721 and a second translated segmented sentence 722, which are respectively translated sentences for the first original segmented sentence 711 and the second original segmented sentence 712.

Subsequently, the user terminal 200 according to an embodiment of the present disclosure may display, in the table, the first original segmented sentence 711 and the first translated segmented sentence 721 in place of an existing display in cells where the first original sentence 611 and the first translated sentence 621 are displayed.

The user terminal 200 according to an embodiment of the present disclosure may generate, in the table, new cells adjacent to the cells where the first original sentence 611 and the first translated sentence 621 are displayed (or cells where the first original segmented sentence 711 and the first translated segmented sentence 721 are displayed). In this case, the new cells may be located, in the table, between the cells where the first original sentence 611 and the first translated sentence 621 are displayed (or the cells where the first original segmented sentence 711 and the first translated segmented sentence 721 are displayed) and cells where the third original sentence 612, which is the next sentence of the first original sentence 611, and the translated sentence 622 thereof are displayed.

The user terminal 200 according to an embodiment of the present disclosure may display the second original segmented sentence 712 and the second translated segmented sentence 722 in the generated new cells.

In this way, the present disclosure may process each segmented sentence generated by segmenting the original sentence as a separate and independent sentence, and automatically provide a translated sentence for each segmented sentence, thereby facilitating the user's editing of translated content.

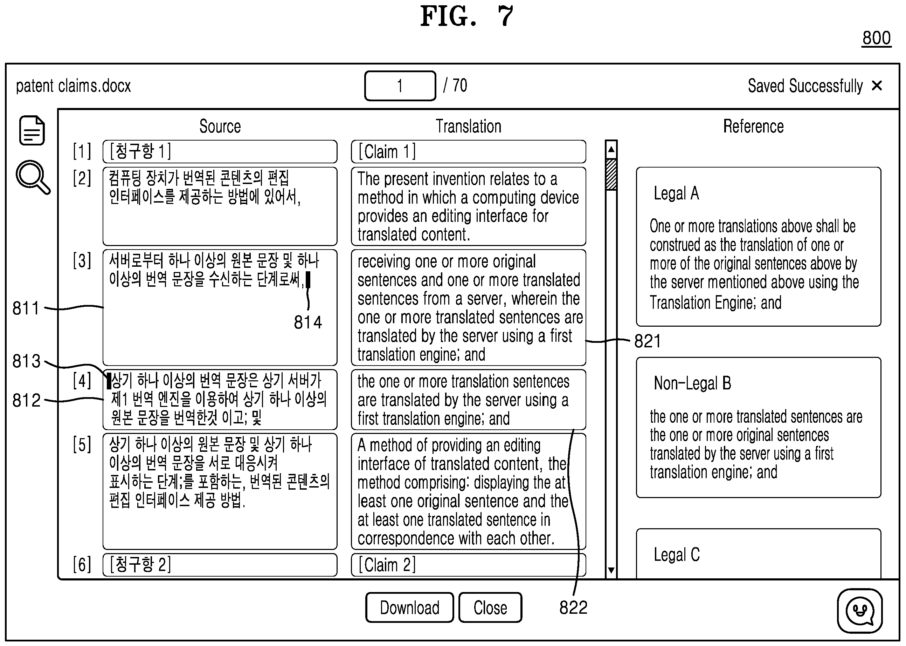

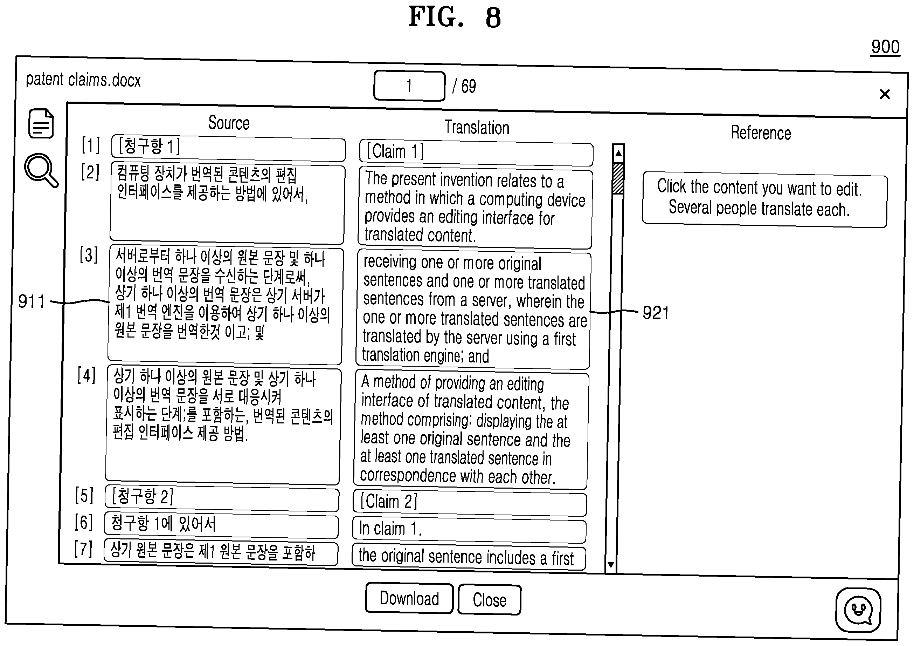

The user terminal 200 according to an embodiment of the present disclosure may update and display a table in response to a user's input to merge the original sentence. Hereinbelow, a description will be made with reference to a screen 800 of FIG. 7 and a screen 900 of FIG. 8 together.

The user terminal 200 according to an embodiment of the present disclosure 200 may obtain a user's input to merge a fourth original sentence 811 and a fifth original sentence 812 in the table. For example, the user terminal 200 may obtain a user's input (for example, a Backspace input on a keyboard) to delete a line break at a first position 813 of the fifth original sentence 812, or a user's input (for example, a Del input on the keyboard) to delete a line break at the last position 814 of the fourth original sentence 811.

The user terminal 200 according to an embodiment of the present disclosure may display, in the table, a first merged sentence 911 as a result of merging the fourth original sentence 811 and the fifth original sentence 812 in place of an existing display, in a cell where the fourth original sentence 811 is displayed. Likewise, the user terminal 200 may display, in the table, a second merged sentence 921 as a result of merging a fourth translated sentence 821 and a fifth translated sentence 822 in place of an existing display, in a cell where the fourth translated sentence 821 is displayed. In this case, the user terminal 200 may delete cells where the fifth original sentence 812 and the fifth translated sentence 822 are displayed.

In a selective embodiment of the present disclosure, the user terminal 200 may transmit a translation request for the first merged sentence 911 to the server 100 and receive a result thereof to display a second merged sentence 921 as a translated sentence for the first merged sentence 911.

In this way, the present disclosure may process a merged sentence generated by merging the original sentence as one sentence, and automatically provide a translation result according to merging of the sentence, thereby facilitating the user's editing of translated content.

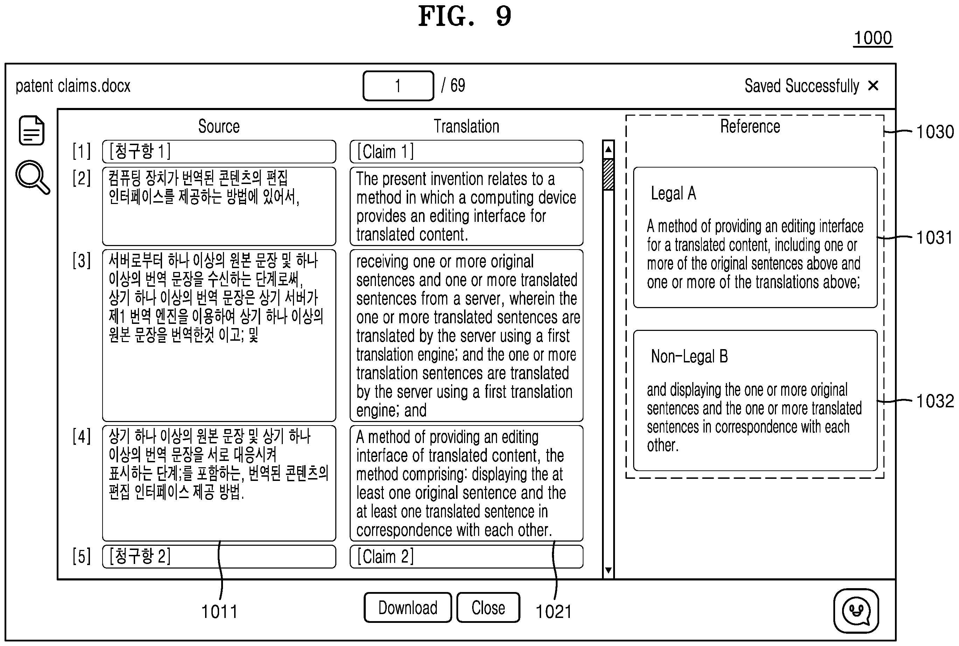

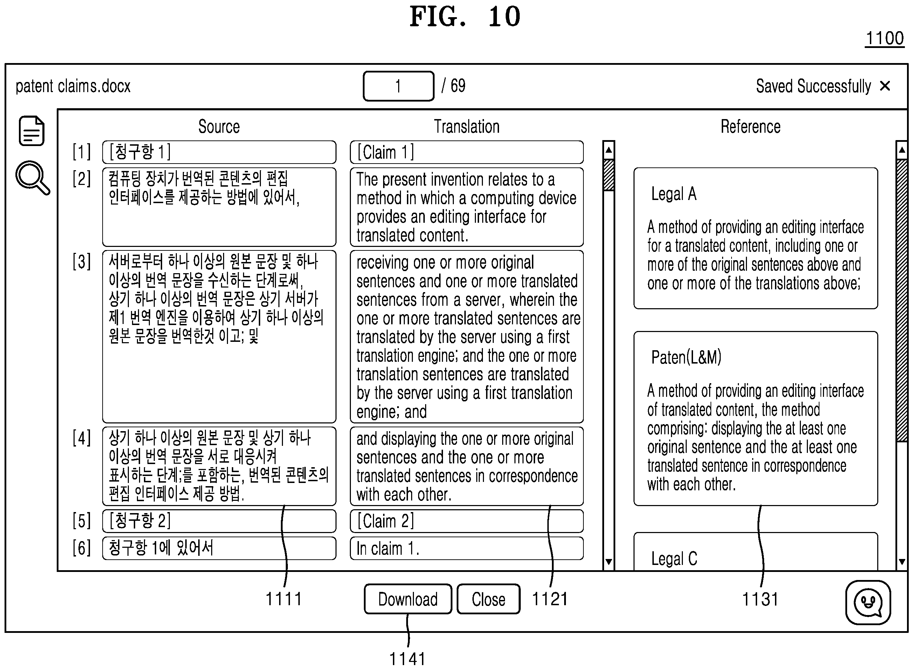

The user terminal 200 according to an embodiment of the present disclosure may provide, on the displayed table, an alternative translated sentence as a result of translating a user-selected sentence using one or more different translation engines. The user terminal 200 may also modify one or more translated sentences based on a user's selection with respect to the provided alternative translated sentence. Hereinbelow, a description will be made with reference to a screen 1000 of FIG. 9 and a screen 1100 of FIG. 10 together.

The user terminal 200 according to an embodiment of the present disclosure may obtain a user's input to select any one of displayed sentences. Herein, the 'displayed sentences' may include both the 'original sentence' and the 'translated sentence'. For example, the user terminal 200 may obtain a user's input to select a translated sentence 1021 with respect to a fourth original sentence 1011.

The user terminal 200 according to an embodiment of the present disclosure may display one or more alternative translated sentences 1030 as a result of translating the user-selected sentence 1021 and the related original sentence 1011 with each of one or more second translation engines, in response to a user's input to select the translated sentence 1021. For example, the user terminal 200 may display a first translated sentence 1031 as a result of translating the original sentence 1011 with a 1st second translation engine and a second translated sentence 1032 as a result of translating the original sentence 1011 with a 2nd second translation engine.

The one or more second translation engines may be different from the first translation engine used by the server 100 to generate the translated sentence 1021. The one or more second translation engines may be specialized for different fields. For example, the 1st second translation engine may be specialized for translation of legal documents, and the 2nd second translation engine may be specialized for translation of non-legal documents.

The user terminal 200 according to an embodiment of the present disclosure may obtain a user's input to select any one of the displayed one or more alternative translated sentences 1030. For example, the user terminal 200 may obtain a user's input to select the second translated sentence 1032.

The user terminal 200 according to an embodiment of the present disclosure may replace a translated sentence related to a user-selected sentence with the selected alternative translated sentence. The user terminal 200 according to an embodiment of the present disclosure may display the selected alternative translated sentence as the translated sentence related to the user-selected sentence. For example, the user terminal 200 may use, as an original sentence 1121 for an original sentence 1111, the second translated sentence 1032 that is generated by the 2nd second translation engine in FIG. 9, as shown in FIG. 10.

In a selective embodiment of the present disclosure, the user terminal 200 may display a translated sentence generated by the first engine, which is an existing translated sentence, as an alternative translated sentence. For example, the user terminal 200 may display, as an alternative sentence 1311, a translated sentence for the original sentence 111 before replacement, as shown in FIG. 10.

The present disclosure also allows a user to select an appropriate translation result for each part in a process of reviewing translation of original content. In particular, the present disclosure may easily solve an error in a translation result, which arises due to the use of a single translation engine, in translation of a document including a combination of sentences belonging to a plurality of fields.

The user terminal 200 according to an embodiment of the present disclosure may update the display of the table according to a user's modification input with respect to any one of the one or more displayed sentences. For example, the user terminal 200 may obtain a user's modification input with respect to the original sentence 1111. In this case, the user terminal 200 may transmit a modified original sentence to the server 100 to receive a modified translated sentence and display the received modified translated sentence in place of the translated sentence 1121. The user terminal 200 may obtain a user's modification input with respect to the translated sentence 1121, apply the user's modification input, and display a modified translated sentence.

As such, the present disclosure may allow the user to modify details and/or a form of the original content and enable modified details to be immediately applied to the translated content.

When a rate of replacement of one or more translated sentences with an alternative translated sentence generated by a specific second translation engine exceeds a predetermined threshold rate, the user terminal 200 according to an embodiment of the present disclosure may display an interface for determining whether to replace a first translation engine with the specific second translation engine. For example, it may be assumed that the original content includes a total of 10 original sentences, the user is reviewing the fifth original sentence, and three sentences including the fifth original sentence are replaced with an alternative sentence generated by the 1st second translation engine. It may be also assumed that the predetermined threshold rate is 25 %.

On the foregoing assumption, the user terminal 200 according to an embodiment of the present disclosure may provide a total number of original sentences, the number of reviewed translated sentences, the number of cases where the reviewed translated sentence is replaced with an alternative sentence generated by the 1st second translation engine among the reviewed translated sentences, and the number of cases where the original sentence is replaced with an alternative sentence generated by the 1st second translation engine among the original sentences.

When the first translation engine is replaced with the specific second translation engine, the user terminal 200 according to an embodiment of the present disclosure may replace the remaining translated sentences other than the reviewed translated sentence with the alternative translated sentence translated by the specific second translation engine. In this way, the present disclosure may prevent user's repetitive modification.

The user terminal 200 according to an embodiment of the present disclosure may obtain a user's request for generating translated content. In other words, the user terminal 200 may obtain a user's documentation request for the displayed one or more translated sentences. For example, the user terminal 200 may obtain a request for generating translated content by obtaining a user's input with respect to a button 1141 of FIG. 10.

By obtaining the request, the user terminal 200 according to an embodiment of the present disclosure may transmit the request for generating translated content to the server 100. In this case, the user terminal 200 according to an embodiment of the present disclosure may transmit, to the server 100, one or more translated sentences and user's modification details of the one or more translated sentences.

Thus, the server 100 according to an embodiment of the present disclosure may determine positions of one or more translated sentences, styles of the one or more translated sentences, and attributes of the one or more translated sentence in translated content by referring to positions of one or more original sentences, styles of the one or more original sentences, and attributes of the one or more original sentences in the original content. The server 100 may generate translated content based on the foregoing matters. For example, the server 100 may generate translated content in the form of a file to provide the same in a downloadable form to the user terminal 200 or generate the translated content in the form of a web page to provide the same in a viewable and/or printable form in the user terminal 200. However, such providing schemes are illustrative and the spirit of the present disclosure is not limited thereto.

Thus, the present disclosure may provide translated content generated in the same format and/or form as the original content.

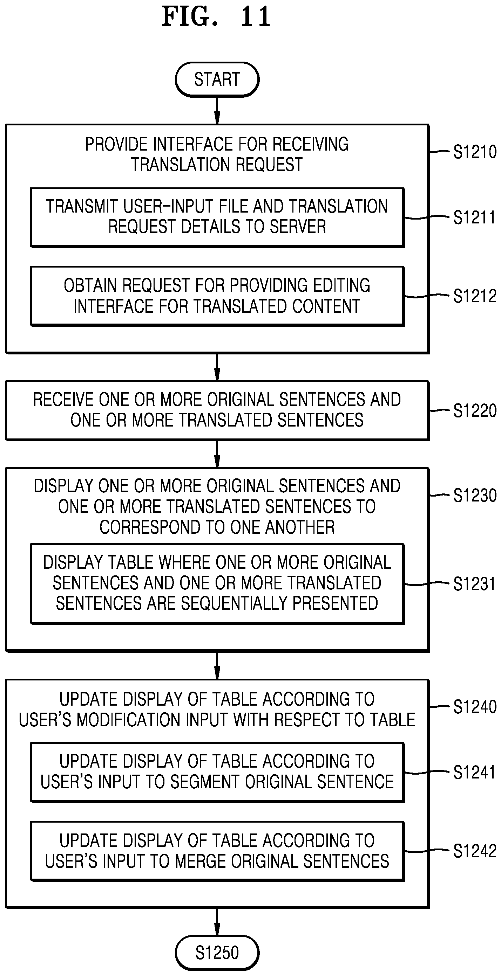

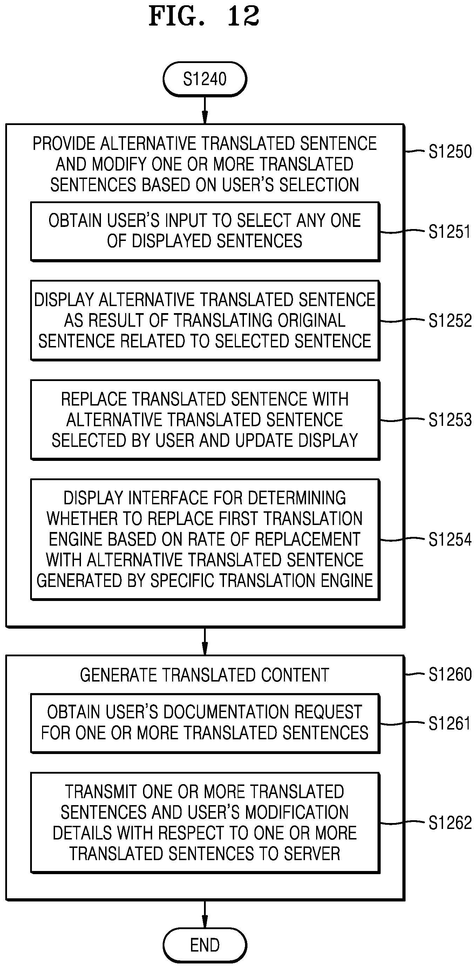

FIGS. 11 and 12 are flowcharts for describing a method of providing an interface for editing translated content provided by the user terminal 200, according to an embodiment of the present disclosure. Hereinbelow, a description will be made with reference to FIGS. 1 to 10 together without a description of redundant matters.

The user terminal 200 according to an embodiment of the present disclosure may provide an interface for receiving a user's translation request for original content, in operation S1210.

FIG. 4 illustrates a screen 500 on which an exemplary interface 530 is provided.

The user terminal 200 according to an embodiment of the present disclosure may provide the screen 500 including the interface 530 as shown in FIG. 4 in response to user's manipulation to access a web site that provides a translation service.

The screen 500 may include the menu region 510 for selecting a service provided on the web site and the display region 520 for providing a page selected on the menu region 510. For example, when the user selects a menu 511 for translating a user's file on the menu region 510, the user terminal 200 according to an embodiment of the present disclosure may provide the interface 530 for receiving a user's translation request on the display region 520. The interface 530 may be provided based on data received from the server 100.

The interface 530 according to an embodiment of the present disclosure may include an interface 531 for uploading the original content in a document file form, an interface 532 for selecting a category of the original content, an interface 533 for selecting a translation target language of the original content, and an interface 534 for transmitting the translation request to the server 100. The interface 530 may further include an interface for indicating a translation state of an uploaded file, an interface for deleting a file, etc.

The user terminal 200 according to an embodiment of the present disclosure may identify the original content to be transmitted to the server 100 for translation according to user's manipulation with respect to the interface 531. For example, the user terminal 200 may identify the original content to be transmitted to the server 100 according to a user's input to select the original content from among contents stored in the memory 230 of the user terminal 200. The user terminal 200 may obtain a user's input with respect to the other interfaces 532 and 533.

The user terminal 200 according to an embodiment of the present disclosure may transmit, to the server 100, the file identified according to the foregoing process and the user's translation request details, in operation S1211. For example, the user terminal 200 may obtain a user's input to request 'Patent' as a category of the original content and 'translation from Korean into English' through the other interfaces 532 and 533 and transmit the user's input to the server 100 together with the original content. However, this is an example and the spirit of the present disclosure is not limited thereto. Thus, the category of the original content may also be 'Legal', 'Affidavit', 'Finance/Accounting', etc., as well as 'Patent' described above. The translation request may include not only translation from Korean into English and vice versa, but also translation between Korean and other languages (e.g., Japanese, Chinese, German, etc.).

In a selective embodiment of the present disclosure, the user terminal 200 may identify a category of the original content and a language in which the original content is written, from the original content identified according to user's manipulation with respect to the interface 531. The user terminal 200 may display the category of the identified original content as a default value on the interface 532 and, similarly, display the language of the identified original content as a default value on the interface 533.

Meanwhile, when the user selects the menu 512 on the menu region 510, the user terminal 200 according to an embodiment of the present disclosure may provide, on the display region 520, an interface (not shown) for receiving a string to be translated for the user and providing a translation result of the string. In this case, the user may input a text to the displayed interface and may be provided with a result of translating the input text.

The user terminal 200 according to an embodiment of the present disclosure may obtain a request for providing an editing interface for translated content, in operation S1212. For example, the user terminal 200 may obtain a user's input with respect to the interface 534 for executing an editor. The user terminal 200 may transmit, to the server 100, translated content and a request for providing an interface for editing the same.

The user terminal 200 according to an embodiment of the present disclosure may receive one or more original sentences and one or more translated sentences from the server 100, in operation S1220.

The user terminal 200 according to an embodiment of the present disclosure may display the received one or more original sentences and the one or more translated sentences to correspond to one another, in operation S1230.

FIG. 5 shows an example screen 600 on which original sentences and translated sentences are displayed corresponding to one another.

As shown in FIG. 5, the user terminal 200 according to an embodiment of the present disclosure may display the one or more original sentences 610 and the one or more translated sentences 620 in the form of a table where they are sequentially presented, in operation S1231. In this case, the user terminal 200 may display the table such that the original sentence and the translated sentence, which have the same meanings, are presented on the same row or column. For example, the user terminal 200 may display the table such that the first original sentence 611 and the first translated sentence 621 as a result of translating the same to have the same meaning are presented in the same row.

The user terminal 200 according an embodiment of the present disclosure may determine a size of a row or a column in which the first original sentence and the first translated sentence are presented on the table, based on the greater length between the length of the first original sentence 611 and the length of the first translated sentence 621. For example, the user terminal 200 may determine the height H1 of the row in which the two sentences 611 and 621 are presented, based on the length of the first translated sentence 621 having the greater length between the two sentences 611 and 621.

As such, the present disclosure may display the one or more original sentences 610 and the one or more translated sentences 620 in the same row (or column) and determine an attribute (e.g., a height of a row) of a cell shared by two sentences based on a length of the sentence having the greater length between the two sentences, thereby enabling intuitive comparison between the original sentence and the translated sentence.

The user terminal 200 according to an embodiment of the present disclosure may update the display of the table according to a user's modification input with respect to the displayed table, in operation S1240. Hereinbelow, with reference to FIGS. 6 to 10, a description will be made of a process in which the user terminal 200 updates the display of the table according to various types of inputs of the user.

The user terminal 200 according to an embodiment of the present disclosure may update and display the table in response to the user's input to segment the original sentence, in operation S1241. Hereinbelow, a description will be made with reference to the screen 600 of FIG. 5 and the screen 700 of FIG. 6 together.

The user terminal 200 according to an embodiment of the present disclosure may obtain a user's input to segment the first original sentence 611 in the table into the first original segmented sentence 711 and the second original segmented sentence 712. For example, the user terminal 200 may obtain an input to segment the first original sentence 611 by obtaining a user's line break input at the position 613 in the first original sentence 611.

The user terminal 200 according to an embodiment of the present disclosure may transmit, to the server 100, a translation request for the first original segmented sentence 711 and the second original segmented sentence 712, which are generated according to the above-described process. The user terminal 200 may also receive, from the server 100, the first translated segmented sentence 721 and the second translated segmented sentence 722, which are respectively translated sentences for the first original segmented sentence 711 and the second original segmented sentence 712.

Subsequently, the user terminal 200 according to an embodiment of the present disclosure may display, in the table, the first original segmented sentence 711 and the first translated segmented sentence 721 in place of an existing display in cells where the first original sentence 611 and the first translated sentence 621 are displayed.

The user terminal 200 according to an embodiment of the present disclosure may generate, in the table, new cells adjacent to the cells where the first original sentence 611 and the first translated sentence 621 are displayed (or cells where the first original segmented sentence 711 and the first translated segmented sentence 721 are displayed). In this case, the new cells may be located, in the table, between the cells where the first original sentence 611 and the first translated sentence 621 are displayed (or the cells where the first original segmented sentence 711 and the first translated segmented sentence 721 are displayed) and cells where the third original sentence 612, which is the next sentence of the first original sentence 611, and the translated sentence 622 thereof are displayed.

The user terminal 200 according to an embodiment of the present disclosure may display the second original segmented sentence 712 and the second translated segmented sentence 722 in the generated new cells.

In this way, the present disclosure may process each segmented sentence generated by segmenting the original sentence as a separate and independent sentence, and automatically provide a translated sentence for each segmented sentence, thereby facilitating the user's editing of translated content.

The user terminal 200 according to an embodiment of the present disclosure may update and display the table in response to the user's input to merge the original sentence, in operation S1242. Hereinbelow, a description will be made with reference to the screen 800 of FIG. 7 and the screen 900 of FIG. 8 together.

The user terminal 200 according to an embodiment of the present disclosure 200 may obtain a user's input to merge the fourth original sentence 811 and the fifth original sentence 812 in the table. For example, the user terminal 200 may obtain a user's input (for example, a Backspace input on a keyboard) to delete a line break at the first position 813 of the fifth original sentence 812, or a user's input (for example, a Del input on the keyboard) to delete a line break at the last position 814 of the fourth original sentence 811.

The user terminal 200 according to an embodiment of the present disclosure may display, in the table, a first merged sentence 911 as a result of merging the fourth original sentence 811 and the fifth original sentence 812 in place of an existing display, in a cell where the fourth original sentence 811 is displayed. Likewise, the user terminal 200 may display, in the table, the second merged sentence 921 as a result of merging the fourth translated sentence 821 and the fifth translated sentence 822 in place of an existing display, in the cell where the fourth translated sentence 821 is displayed. In this case, the user terminal 200 may delete cells where the fifth original sentence 812 and the fifth translated sentence 822 are displayed.

In a selective embodiment of the present disclosure, the user terminal 200 may transmit a translation request for the first merged sentence 911 to the server 100 and receive a result thereof to display the second merged sentence 921 as a translated sentence for the first merged sentence 911.

In this way, the present disclosure may process a merged sentence generated by merging the original sentence as one sentence, and automatically provide a translation result according to merging of the sentence, thereby facilitating the user's editing of translated content.

The user terminal 200 according to an embodiment of the present disclosure may provide, on the displayed table, an alternative translated sentence as a result of translating a user-selected sentence using one or more different translation engines, in operation S1250. The user terminal 200 may also modify the one or more translated sentences based on a user's selection with respect to the provided alternative translated sentence. Hereinbelow, a description will be made with reference to a screen 1000 of FIG. 9 and a screen 1100 of FIG. 10 together.

The user terminal 200 according to an embodiment of the present disclosure may obtain a user's input to select any one of the displayed sentences, in operation S1251. Herein, the 'displayed sentences' may include both the 'original sentence' and the 'translated sentence'. For example, the user terminal 200 may obtain a user's input to select the translated sentence 1021 with respect to the fourth original sentence 1011.

The user terminal 200 according to an embodiment of the present disclosure may display the one or more alternative translated sentences 1030 as a result of translating the user-selected sentence 1021 and the related original sentence 1011 with each of one or more second translation engines, in response to a user's input to select the translated sentence 1021, in operation S1252. For example, the user terminal 200 may display the first translated sentence 1031 as a result of translating the original sentence 1011 with the 1st second translation engine and a second translated sentence 1032 as a result of translating the original sentence 1011 with the 2nd second translation engine.

The one or more second translation engines may be different from the first translation engine used by the server 100 to generate the translated sentence 1021. The one or more second translation engines may be specialized for different fields. For example, the 1st second translation engine may be specialized for translation of legal documents, and the 2nd second translation engine may be specialized for translation of non-legal documents.

The user terminal 200 according to an embodiment of the present disclosure may obtain a user's input to select any one of the displayed one or more alternative translated sentences 1030. For example, the user terminal 200 may obtain a user's input to select the second translated sentence 1032.

The user terminal 200 according to an embodiment of the present disclosure may replace a translated sentence related to a user-selected sentence with the selected alternative translated sentence. The user terminal 200 according to an embodiment of the present disclosure may display the selected alternative translated sentence as the translated sentence related to the user-selected sentence, in operation S1253. For example, the user terminal 200 may use, as the original sentence 1121 for the original sentence 1111, the second translated sentence 1032 that is generated by the 2nd second translation engine in FIG. 9, as shown in FIG. 10.

In a selective embodiment of the present disclosure, the user terminal 200 may display a translated sentence generated by the first engine, which is an existing translated sentence, as an alternative translated sentence. For example, the user terminal 200 may display, as the alternative sentence 1311, a translated sentence for the original sentence 111 before replacement, as shown in FIG. 10.

The present disclosure also allows a user to select an appropriate translation result for each part in a process of reviewing translation of original content. In particular, the present disclosure may easily solve an error in a translation result, which arises due to the use of a single translation engine, in translation of a document including a combination of sentences belonging to a plurality of fields.

The user terminal 200 according to an embodiment of the present disclosure may update the display of the table according to a user's modification input with respect to any one of the one or more displayed sentences. For example, the user terminal 200 may obtain a user's modification input with respect to the original sentence 1111. In this case, the user terminal 200 may transmit a modified original sentence to the server 100 to receive a modified translated sentence and display the received modified translated sentence in place of the translated sentence 1121. The user terminal 200 may obtain a user's modification input with respect to the translated sentence 1121, apply the user's modification input, and display a modified translated sentence.

As such, the present disclosure may allow the user to modify details and/or a form of the original content and enable modified details to be immediately applied to the translated content.

When a rate of replacement of the one or more translated sentences with the alternative translated sentence generated by the specific second translation engine exceeds a predetermined threshold rate, the user terminal 200 according to an embodiment of the present disclosure may display an interface for determining whether to replace the first translation engine with the specific second translation engine, in operation S1254. For example, it is assumed that the original content includes a total of 10 original sentences, the user is reviewing the fifth original sentence, and three sentences including the fifth original sentence are replaced with an alternative sentence generated by the 1st second translation engine. It may be also assumed that the predetermined threshold rate is 25 %.

On the foregoing assumption, the user terminal 200 according to an embodiment of the present disclosure may provide a total number of original sentences, the number of reviewed translated sentences, the number of cases where the reviewed translated sentence is replaced with an alternative sentence generated by the 1st second translation engine among the reviewed translated sentences, and the number of cases where the original sentence is replaced with an alternative sentence generated by the 1st second translation engine among the original sentences.

When the first translation engine is replaced with the specific second translation engine, the user terminal 200 according to an embodiment of the present disclosure may replace the remaining translated sentences other than the reviewed translated sentence with the alternative translated sentence translated by the specific second translation engine. In this way, the present disclosure may prevent user's repetitive modification.

The user terminal 200 according to an embodiment of the present disclosure may generate translated content, in operation S1260. To this end, the user terminal 200 according to an embodiment of the present disclosure may obtain a user's request for generating translated content, in operation S1261. In other words, the user terminal 200 may obtain a user's documentation request for the displayed one or more translated sentences. For example, the user terminal 200 may obtain a request for generating translated content by obtaining a user's input with respect to the button 1141 of FIG. 10.

By obtaining the request, the user terminal 200 according to an embodiment of the present disclosure may transmit the request for generating translated content to the server 100, in operation S1262. In this case, the user terminal 200 according to an embodiment of the present disclosure may transmit, to the server 100, one or more translated sentences and user's modification details of the one or more translated sentences.

Thus, the server 100 according to an embodiment of the present disclosure may determine positions of one or more translated sentences, styles of the one or more translated sentences, and attributes of the one or more translated sentence in translated content by referring to positions of one or more original sentences, styles of the one or more original sentences, and attributes of the one or more original sentences in the original content. The server 100 may generate translated content based on the foregoing matters. For example, the server 100 may generate translated content in the form of a file to provide the same in a downloadable form to the user terminal 200 or generate the translated content in the form of a web page to provide the same in a viewable and/or printable form in the user terminal 200. However, such providing schemes are illustrative and the spirit of the present disclosure is not limited thereto.

Thus, the present disclosure may provide translated content generated in the same format and/or form as the original content.

An embodiment of the present disclosure described above may be implemented in the form of a computer program executable on a computer through various components, and the computer program may be recorded on a computer-readable medium. The medium may be one that stores a program executable on a computer. Examples of the medium may include a magnetic medium such as a hard disk, a floppy disk, and a magnetic tape, an optical recording medium such as a compact disc (CD)-read-only memory (ROM) and a digital versatile disk (DVD), a magneto-optical medium such as a floptical disk, ROM, random-access memory (RAM), flash memory, cloud memory, etc., to store a program instruction.

Meanwhile, the computer program may be a program command specially designed and configured for the present disclosure or a program command known to be used by those of ordinary skill in the art of the computer software field. Examples of the computer program may include not only a machine language code created by a complier, but also a high-level language code executable by a computer using an interpreter.

Certain executions described here are embodiments of the present disclosure, not limiting the scope of the present disclosure in any way. For the brevity of the specification, the description of conventional electronic configurations, control systems, software, and other functional aspects of the systems may be omitted. Connections of lines or connection members between components shown in the drawings are illustrative of functional connections and/or physical or circuit connections, and in practice, may be represented as alternative or additional various functional connections, physical connections, or circuit connections. In addition, when there is no specific mentioning, such as "essential" or "important", it may not be a necessary component for the application of the present disclosure.

Thus, the spirit of the present disclosure should not be determined by being limited to the above-described embodiments, and not only the claims set forth below, but also any range equivalent to or equivalently changed from the claims falls within the scope of the spirit of the present disclosure.

## Claims

1. A method of providing, by a computing device, an editing interface for translated content, the method comprising:
receiving, from a server, one or more original sentences and one or more translated sentences, wherein the one or more translated sentences are results of translating, by the server, the one or more original sentences by using a first translation engine; and
displaying the one or more original sentences and the one or more translated sentences to correspond to one another.

2. The method of claim 1, wherein the one or more original sentences comprise
a first original sentence, and
the one or more translated sentences comprise a first translated sentence that is a result of translating the first original sentence by using the first translation engine, and
the displaying comprises displaying a table on which the one or more original sentences and the one or more translated sentences are sequentially presented such that the first original sentence and the first translated sentence are located in a same row or a same column.

3. The method of claim 2, wherein the displaying comprises determining, in the table, a size of the row or the column where the first original sentence and the first translated sentence are located, based on a greater length between a length of the first original sentence and a length of the first translated sentence.

4. The method of claim 2, further comprising, after the displaying,
updating display of the table according to a user's modification input with respect to the table.

5. The method of claim 4, wherein the one or more original sentences comprise
a second original sentence, and
the updating of the display of the table comprises:
obtaining a user's input to segment the second original sentence in the table into a first original segmented sentence and a second original segmented sentence; receiving, from the server, a first translated segmented sentence and a second translated segmented sentence which are translated sentences respectively of the first original segmented sentence and the second original segmented sentence;
displaying, in the table, the first original segmented sentence and the second original segmented sentence in place of an existing display, in cells where the second original sentence and a second translated sentence, which is a translated sentence of the second original sentence, are displayed; and
generating, in the table, new cells adjacent to the cells where the second original sentence and a second translated sentence, which is a translated sentence of the second original sentence, are displayed, and displaying the second original segmented sentence and the second translated segmented sentence in the new cells, wherein the new cells are located between the cells where the second original sentence and the second translated sentence are displayed and cells where a third original sentence, which is a next sentence of the second original sentence, and a translation result thereof are displayed, in the table.

6. The method of claim 4, wherein, in the updating of the display of the table,
the one or more original sentences comprise a fourth original sentence and a fifth original sentence, and
the one or more translated sentences comprise a fourth translated sentence and a fifth translated sentence which are results of respectively translating the fourth original sentence and the fifth original sentence by using the first translation engine, and the updating of the display of the table comprises:
obtaining a user's input to merge the fourth original sentence and the fifth original sentence in the table;
displaying, in the table, a first merged sentence as a result of merging the fourth original sentence and the fifth original sentence in place of existing display in a cell where the fourth original sentence is displayed;
displaying, in the table, a second merged sentence as a result of merging the fourth translated sentence and the fifth translated sentence in place of an existing display in a cell where the fourth translated sentence is displayed; and
deleting, from the table, cells where the fifth original sentence and the fifth translated sentence are displayed.

7. The method of claim 1, further comprising, after the displaying, providing an alternative translated sentence as a result of translating a user-selected sentence by using one or more different translation engines and modifying the one or more translated sentences based on a user's selection with respect to the provided alternative translated sentence.

8. The method of claim 7, wherein the modifying of the one or more translated sentences comprises displaying, by each of one or more second translation engines, an alternative translated sentence as a result of translating an original sentence related to the user-selected sentence in response to a user's input to select any one of displayed sentences, wherein the one or more second translation engines comprise a translation engine that is different from the first translation engine.

9. The method of claim 8, wherein the modifying of the one or more translated sentences comprises:
replacing, according to a user's input to select any one of displayed one or more alternative translated sentences, the translated sentence related to the user-selected sentence with the selected alternative translated sentence; and
displaying the selected alternative translated sentence as a translated sentence of the original sentence related to the user-selected sentence.

10. The method of claim 9, wherein the modifying of the one or more translated sentences comprises, when a rate of replacement of the one or more translated sentences with an alternative translated sentence generated by a specific second translation engine exceeds a predetermined threshold rate, displaying an interface for determining whether to replace the first translation engine with the specific second translation engine.

11. The method of claim 1, wherein, after the displaying, transmitting, to the server, a request for generating translated content comprising the one or more translated sentences, in response to obtaining a user's documentation request for the displayed one or more translated sentences.

12. The method of claim 11, wherein the server determines positions of the one or more translated sentences, styles of the one or more translated sentences, and attributes of the one or more translated sentences in the translated content by referring to positions of the one or more original sentences, styles of the one or more original sentences, and attributes of the one or more original sentences in original content.

13. The method of claim 11, further comprising, before the receiving, providing an interface for receiving a user's translation request for original content.

14. The method of claim 13, wherein the interface comprises at least one of an interface for uploading the original content, an interface for selecting a category of the original content, and an interface for selecting a translation target language of the original content.

15. A computer program stored in a medium to execute the method of any one of claims 1 to 14, by using a computer.
